# EUROPEAN PATENT SPECIFICATION

(11) **EP 2 876 886 B1**
(45) Date of publication and mention of the grant of the patent: **15.08.2018**
(21) Application number: 14194911.5
(22) Date of filing: 26.11.2014
(51) Int. Cl.: H04N 21/422, H04N 5/44

(54) **Methods and systems to notify user of a problem with a remote control**
Verfahren und Systeme zur Benachrichtigung eines Nutzers über ein Problem mit einer Fernsteuerung
Procédés et systèmes pour informer un utilisateur d'un problème avec commande à distance

(30) Priority: 26.11.2013 US 201314090645
(43) Date of publication of application: 27.05.2015
(73) Proprietor: EchoStar Technologies L.L.C., Englewood, CO 80112 (US)
(72) Inventor: Schafer, Adam, Aurora, CO Colorado 80015 (US); Mickelsen, Jeremy, Denver, CO Colorado 80209 (US)
(74) Representative: Sadler, Peter Frederick

(56) References cited:
- EP-A2- 0 505 006
- WO-A1-01/50750
- WO-A1-2013/049630
- CN-A- 101 471 812
- US-A1- 2009 165 060
- US-A1- 2012 242 455

## Description

### BACKGROUND

### Technical Field

The present disclosure relates to the field providing technical support to a user of an electronic device.

### Description of the Related Art

Users of modern electronic devices such as computers, laptops, tablets, smart phones, television receivers, and many other kinds of electronic devices frequently encounter technical problems that they do not know how to resolve. For instance, the user of a new laptop may not be able to connect to the internet, install certain software, or enable certain features of the hardware. Such a user may require technical assistance.

To obtain technical assistance the user may call a technical support phone number which will connect the user to technical support center where the user can obtain assistance from a technical support technician. Alternatively, the user may seek to obtain technical support by accessing a website or a particular part of a website devoted to providing technical support.

Oftentimes a user of an electronic device is very unfamiliar with the electronic device or electronic devices in general. Such a user may have a very difficult time obtaining technical support because he may not have any notion where to begin in describing the problem to a technician so that the technician can begin to understand what area of the hardware or software is the cause of the problem. This can result in a very frustrating phone call for both the technician and the user. The user may become upset and feel like it was a mistake to purchase the electronic device and may wish to get a refund. The user may tell friends and family about the experience and a negative impression of the electronic device and the company that manufactures it may
spread, causing harm to the manufacturer or distributor of the electronic device. It is therefore desirable to provide improved technical support to those having difficulties with an electronic device.

US Patent application US2009/0165060 describes a method for configuring a device using a remote control, which includes transmitting a signal from the remote control to a configuration proxy requesting configuration status of the device; waiting for a predetermined period of time for a response from the configuration proxy to the remote control; obtaining help information based on the response received at the remote control from the configuration proxy; and displaying the help information. The described system allows the help information to be displayed on a display of the remote control, and does not allow a problem with the remote control to be identified. In particular, not disclosed is the transmission of a status message indicating a charge state of at least one battery of the remote control from the device to a remotely located computer and generating, at the computer, a notification indicating that the battery or batteries are in a depleted state based on the status message.

International application WO01/50750 describes integrated units which combine the functions of (1) a television or other entertainment device, (2) an observe-then-perform educational and instructional CD mode of operation, and (3) a major appliance controller with diagnostic capabilities. Such units are able to make information on the status of an appliance associated with the system available to a user or a repair service facility. Chinese application CN101471812 describes a system that includes servers, a remote control host computer, and a mobile device. When one of the servers operates abnormally, a user can control the remote control host computer to transmit a control signal to the server that operates abnormally. When the server receives the control signal, the server sends a corresponding caution message and transmits a status message to the mobile device. Both of these references do not deal with identifying issues of the operation of television remote controls, and particularly the status of battery depletions.

### BRIEF SUMMARY

One embodiment is a method for providing technical support to a user of an electronic device. When a user requests technical support with respect to the electronic device, a remote computer in a technical support network requests that the electronic device provide a status message regarding one or more components of the electronic device. The electronic device then transmits to the remote computer the status message regarding one or more components of the electronic device. If the status message indicates that a component of the electronic device is not functioning properly, then a message can be sent to the user of the electronic device indicating what component is faulty and how to proceed to fix it.

In one embodiment a technical support network receives a phone call from a user of a television receiver. When the technical support network receives the phone call from the user, the technical support network ascertains the identity of the user. After the technical support network ascertains the identity of the user, technical support network identifies that the electronic device is associated with the user. The technical support network then transmits a request to the television receiver to provide a status message indicating a charge state of batteries in a remote control associated with the television receiver. If the status message indicates that the batteries are depleted, then a message is transmitted to the user indicating that the batteries should be replaced or recharged.

Thus, as is often the case, the problem with the television receiver may be the result of dead batteries in the remote-control. Before the user can have a frustrating phone conversation with a technical support assistant, the user is automatically informed that the batteries are low and should be replaced. By replacing the batteries the technical problem may be resolved.

The invention is defined in the claims to which reference is now directed.

According to a first aspect of the invention a method may comprise: receiving from a user, by a technical support network located at a remote site, a request regarding an electronic system including a television receiver; retrieving, by the technical support network, from a database an identity associated with the request; ascertaining , by the technical support network, that the request is associated with the television receiver based on the identity; transmitting, by the technical support network, to the television receiver, a first request to transmit a state of batteries in a remote control associated with the television receiver to the technical support network in response to ascertaining that the request is associated with the television receiver; receiving, by the television receiver, the first request to transmit the state of batteries in the remote control; transmitting, by the television receiver, to the remote control a second request to transmit the state of batteries in the remote control, in response to receiving the first request; receiving, by the television receiver, from the remote control a first status message regarding the state of the batteries in the remote control; transmitting, by the television receiver, to the technical support network a second status message regarding the state of the batteries in the remote control, in response to receiving the first status message; and receiving, by the technical support network, a signal from the television receiver indicative of the state of the batteries in the remote control associated with the television receiver; generating, by the technical support network, a notification that the batteries are in a depleted state; and transmitting, by the technical support network, the notification to a device associated with the request without assistance of an operator of the technical support network.

The method may further comprise displaying the notification on a display coupled to the television receiver.

Transmitting the notification may comprise transmitting the notification to a telephone of a user associated with the request.

The method may further comprise transmitting the notification to a technician assisting the user.

The method may further comprise: retrieving the identity based on a telephone number of a telephone from which the request regarding the electronic system was received; and transmitting the notification to the telephone. The notification may be an audio signal.

The method may further comprise: transmitting the notification to a telephone of a user associated with the request, wherein the notification is a text message.

According to a second aspect of the invention a system is provided comprising: a television receiver configured to display television content on a display coupled to the television receiver; a technical support network configured to: receive a status message from the television receiver; receive a request for technical support from a user of the television receiver; receive an identification of the user; ascertain that the user is associated with the television receiver by referring to a database; and generate a notification indicating a problem with equipment of the user based on the status message.

More specifically, according to the second aspect of the invention, the system may comprise: a television receiver configured to display television content on a display coupled to the television receiver and to transmit a status message indicating a charge state of at least one battery included in a remote control associated with the television receiver; and a technical support network. The technical support network is configured to: receive a request regarding an electronic system including the television receiver; receive an identification associated with the user; ascertain that the request is associated with the television receiver by referring to a database; transmit, to the television receiver, a request to transmit a status message regarding a state of at least one battery in a remote control associated with the television receiver to the technical support network in response to ascertaining that the request is associated with the television receiver, the remote control being different from the television receiver; receive the status message from the television receiver; generate a notification indicating a problem with the electronic system and a possible solution to the problem based on the status message; and transmit the notification indicating the problem with the electronic system and the possible solution to the problem to a device associated with the request without assistance of an operator of the technical support network.

The technical support network may be configured to transmit the notification to a technician.

The technical support network may be configured to transmit the notification to a telephone of the user.

The technical support network may be configured to transmit the notification via a text message.

The notification may be an audio signal.

The technical support network may be configured to transmit a request to transmit the status message indicating the status of the remote control to the television receiver in response to receiving the identification of the user, and the television receiver is configured to transmit the status message indicating the status of the remote control in response to receiving the request to transmit the status message indicating the status of the remote control.

There may also be provided a television receiver configured for use in the methods described herein, or configured for use in the systems described herein.

### BRIEF DESCRIPTION OF THE SEVERAL VIEWS OF THE DRAWINGS

Figure 1 is a block diagram of a system including an electronic device of a user, a communication device of a user, and a technical support network according to one embodiment.
Figure 2 is a block diagram of a technical support network according to one embodiment.
Figure 3 is an illustration of a user residence and a technical support network according to one embodiment.
Figure 4 is a block diagram of a remote control and a television receiver according to one embodiment.
Figure 5 is a flowchart for a method for providing technical support according to one embodiment.

### DETAILED DESCRIPTION

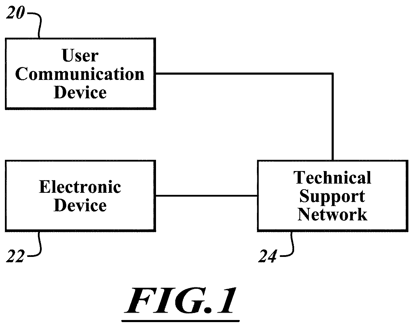

Figure 1 is a block diagram of a network including a user communication device 20, an electronic device 22, and a technical support network 24. Both the user electronic device 24 and the user communication device 20 are coupled to the technical support network 24.

In one embodiment, a user of the electronic device 22 may experience technical difficulties while operating the electronic device 22. In this situation, the user may contact the technical support network 24 via the user communication device 20. When the user contacts the technical support network 24 using the user communication device 20, the technical support network identifies the user. The technical support network 24 also identifies that the user is associated with the electronic device 22. When the technical support network 24 ascertains that the user that has contacted the technical support network 24 is associated with the electronic device 22, the technical support network 24 sends a request to the electronic device 22 for a status message regarding one or more components of the electronic device 22. The electronic device 22 transmits the status message to the technical support network 24. The status message may indicate that a component of the electronic device 22 is the source of the technical difficulty that the user is experiencing with the electronic device 22.

When the technical support network 24 has received the status message from the electronic device 22, the technical support network 24 transmits the status message to the user 20. In this way, the user 20 is informed that a particular component of the electronic device 22 may be the source of the technical difficulty experienced by the user.

In one embodiment, the user communication device 20 is a phone from which the user has contacted the technical support network 24. Upon receiving the status message from the electronic device 22, the technical support network 24 transmits the status message to the phone. The status message can be transmitted to the phone via a text message, as part of the phone call, or in any other suitable manner.

In one embodiment, the technical support network 24 transmits the status message to a device of the user other than the user communication device 20 by which the user has contacted the technical support network 24. In one example, the technical support network 24 sends an email to an email account associated with the user. Alternatively, the technical support network 24 can cause the electronic device 22 to display the status message to the user.

In one embodiment, the technical support network 24 identifies the user based on the telephone number from which the user is calling. In such an example, the technical support network 24 may have, stored in a database, a telephone number associated with the user. If the user calls from the telephone number associated with the user, then the technical support network 24 identifies the user. The technical support network 24 can then identify that the electronic device 22 is associated with the user. This can be done by referring to a database that stores information regarding the user including what electronic devices are associated with the user. Thus, when the user calls the technical support network 24, the technical support network 24 immediately identifies the user, obtains the status message from the electronic device 22, and transmits the status message to the user upon receiving the phone call from the user. In this example, the user can obtain a resolution to the technical problem without having to speak with a technical support technician.

In one example, when the user contacts the technical support network 24, the user speaks with an automated phone program which requests information from the user, presents selection menus to the user, and provides information to the user. When the user calls the technical support network 24 and presses a number on the phone indicating that the user requests technical support, the automated telephone program can present the status message to the user audibly. The status message can include instructions for fixing or replacing a component of the electronic device 22 which has been identified as causing the problem.

In one embodiment, when the user contacts the technical support network 24, the user communicates with a technical support technician. The technical support network 24 provides the technical support technician with the status message indicating that a component of the electronic device 22 may be causing the problem. The technical support technician then informs the user that a particular component of the electronic device 22 may be causing the problem. In this way, the technical support technician is easily provided with a possible solution to the problem about which the user is calling.

In one example, the electronic device 22 is a television receiver at the residence or place of business of the user. The user may be experiencing technical difficulty in operating the electronic device 22. The user then calls the technical support network 24 to obtain assistance in resolving the problem. Through long experience it has become apparent that when a user is experiencing technical difficulties with a television receiver, the problem is often that the batteries in the remote control which controls the television receiver have gone dead. To prevent the possibility that the user may have to wait on hold for some time until a technical support technician becomes available to speak with the user, the technical support network 24 can obtain from the television receiver 22 information regarding the state of the batteries of the remote control that control the television receiver 22. If the batteries are depleted, then the technical support network 24 can communicate this to the user before the user has had to suffer through waiting on hold to speak with a technical support technician. The user can then replace the batteries or recharge them, and test the television receiver to see if the problem has been resolved. If the problem has been resolved, then there is no further need to contact the technical support network 24. If the problem has not been resolved, then the user can continue waiting to speak to a technical support technician.

The electronic device 22 is not limited to a television receiver, but can also include a computer, a laptop, a tablet, a phone, a car, or any other electronic device about which a user may need to contact the technical support network 24. In one example, the electronic device 22 is an automobile capable of connecting to the technical support network 24. If the operator of the automobile needs technical assistance in operating the automobile, the user can call the technical support network 24. The technical support network 24 can identify the user and can identify that the user is associated with a particular automobile. The technical support network 24 can then send a request to the automobile for a status message. The automobile can transmit a status message to the technical support network 24. The status message can indicate that a component of the automobile such as a battery, an alternator, a particular component of the engine, or some other component of the automobile has become faulty. The technical support network 24 can then communicate to the user the status message. In this way, the user can obtain information regarding the status of the automobile and can quickly ascertain repairs that need to be made. If the repairs are simple repairs which can be performed by the user, then the user can avoid taking the automobile to a repair shop. In this way, the user can save both time and money.

In one example, the electronic device 22 is a computer. The user may be experiencing a technical problem with the computer and may contact the technical support network 24. The technical support network 24 can be contacted by phone or by the computer via the Internet. The technical support network 24 can then transmit a request to the computer for a status message. The computer then transmits to the technical support network 24 a status message indicating that a particular component or components of the computer are faulty or are currently configured in a way that is causing the user technical difficulty. The computer can then display to the user the status message indicating that a particular component of the computer is faulty. In this way, the user can quickly and easily obtain technical support that is likely to be relevant to the problem being experienced by the user.

Thus, the user can contact the technical support network 24 not only by phone but also by accessing a web site via the Internet. The user can interact with the technical support network 24 via the web site. The technical support network 24 can provide a status message to the user as indicated previously. In one embodiment, the status message is presented to the user on a display coupled to the television receiver.

Many other ways of interacting with the technical support network 24 are possible in accordance with the principles of the present disclosure, and will be apparent to those of skill in the art in light of the present disclosure. All such other ways of interacting with the technical support network 24 fall within the scope of the present disclosure.

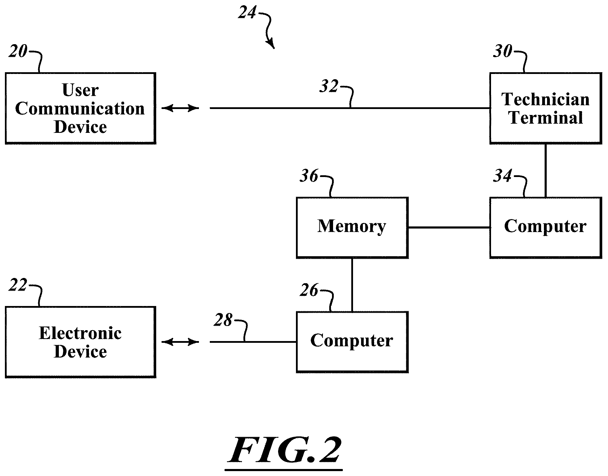

Figure 2 is a block diagram of a technical support network 24 according to one embodiment. The technical support network 24 includes a computer 26 coupled to the electronic device 22 by a network connection 28. A technician terminal 30 is coupled to the user communication device 20 by a network connection 32. A computer 34 is coupled to the technician terminal 30. A memory 36 is coupled to the computer 26 and the computer 34.

A user of the electronic device 22 contacts the technical support network 24 when he has a difficulty with the electronic device 22. The user contacts the technical support network 24 with the user communication device 20 via the network connection 32. The user communication device 20 is connected to the technician terminal 30, and the user communicates with a technical support technician at the technician terminal 30. When the user contacts the technical support network 24, the computer 34 identifies the user. The computer 34 can identify the user based on an identification of the user communication device 20, or based on information provided by the user. The computer 34 then references a database in the memory 36 and ascertains that the user is associated with the electronic device 22. The computer 34 transmits the identity to the computer 26. The computer 26 transmits a request for a status message to the electronic device 22 via the communication link 28. The electronic device 22 transmits a status message indicating that one or more components of the electronic device 22 are in a condition that could be causing the technical difficulties experienced by the user. The computer 26 receives the status message from the electronic device 22 and transmits it to the computer 34. The computer 34 generates a notification indicating that the one or more components of the electronic device 22 are in a condition which could be causing the technical difficulties experienced by the user. The notification is transmitted from the technician terminal 30 to the user communication device 20 via the communication link 32.

In one embodiment, the notification is transmitted to the user communication device 20 automatically without the assistance of the technical support technician associated with the technician terminal 30. Alternatively, the notification can be sent to the user communication device by the technical support technician at the technician terminal 30. In this case, the technical support technician can speak the notification to the user via the user communication device and network link 32.

In one embodiment, the computer 34 is stationed at the technician terminal 30. The computer 26 can be located in an entirely different part of the world. The computer 26 can be a group of computers.

When the user contacts the technical support network 24 via the user communication device 20, the communication link 32 can be coupled to the computer 26, the computer 34, or to a different computer. As described previously in relation to Figure 1, the notification can be transmitted to the user communication device 20 without ever communicating with the technician terminal 30. Instead, the computer 26 can cause the notification to be sent directly to the user as soon as the status message is received from the electronic device 22 by the computer 26.

In one embodiment, the communication link 32 is a telephone communication link. In this case, the user communication device 20 is a telephone or smartphone by which the user has called a technical support number in order to communicate with the technical support network 24. Alternatively, the communication link 32 can be an Internet communication link.

In one embodiment, the communication link 28 is an Internet communication link. The electronic device 22 can be connected to the Internet via a modem in the same location as the electronic device 22. The electronic device 22 can communicate via the modem with the computer 26 over the Internet 28. Alternatively, the communication link 28 can be a satellite communication link. In this case, the electronic device 22 communicates with the computer 26 by communicating with a satellite in orbit. The satellite can receive a status message from the electronic device 22 and transmit it to the computer 26.

In one embodiment, the memory 36 includes a bank of electronic storage devices. The electronic storage devices can be one or more hard drives, solid state drives, or other types of computer-readable media. The memory 36 can be at a location or multiple locations remote from both the computer 26 and the computer 34. Alternatively, the memory 36 can be at the same location as the computer 26 and/or the computer 34.

The memory 36 includes a database of user identifications and electronic devices associated with the user identifications. Thus, when the user contacts the technical support network 24, one or more computers of the technical support network 24 can refer to the database stored in the memory 36 to ascertain the user identity and to ascertain that the user is associated with the electronic device 22.

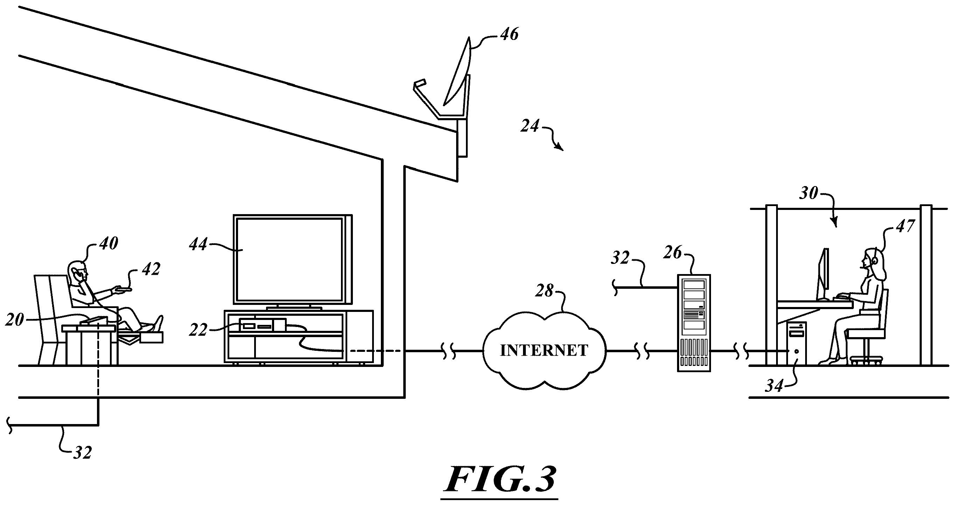

Figure 3 is an illustration of a residential setting including an electronic device coupled to a technical support network 24 according to one embodiment. A user 40 is at a residence and is attempting to utilize a television receiver 22 by controlling the television receiver 22 with a remote control 42. The television receiver 22 is coupled to a television 44. The television receiver 22 receives television programming signals via a satellite dish 46. The television receiver 22 displays the television content on the television 44. The television receiver 22 is also coupled via the internet 28 to a computer 26 of a technical support network 22. The computer 26 is also coupled to a technician terminal 30 including a computer 34. A technical support technician 47 is at the technical support terminal 30.

As illustrated in Figure 3, the user 40 is experiencing technical difficulties while attempting to operate the television receiver 22. The user 40 has called the technical support network 24 by using the telephone 20. The telephone 20 connects to the technical support network 24 via the phone line 32 that, while shown as connecting to the computer 26, may connect to the technical support network 24 in any other suitable way. When the user 40 calls the technical support network 24, the computer 26 is notified that a user 40 has contacted the technical support network 24 and seeks technical support to resolve the problem he is experiencing. The computer 26 identifies the user 40 by referring to a database stored in the memory 36 as described previously. The computer 26 can ascertain the identity of the user 40 by identifying that the telephone number of the telephone 20 from which the user is calling is associated with that user. Alternatively, the computer 26 can identify the user based on input the user has provided to the technical support network 24. The computer 26 transmits a request to the television receiver 22 requesting a status message regarding one or more components of the television receiver 22. The request is transmitted to the television receiver 22 via the Internet 28. The television receiver 22 transmits a request to the remote control 42 to provide information regarding the state of the batteries within the remote control 42. The television receiver 22 receives information that the batteries of the remote control 42 are depleted or retrieves stored remote battery information in the event the remote cannot be contacted. The television receiver 22 transmits a status message to the computer 26 via the Internet 28. The status message indicates that the batteries of the remote control 42 associated with the television receiver 22 are depleted. The technical support network 24 generates a notification that the batteries are depleted. The technical support network 24 then transmits to the user 40 the notification indicating that the batteries in the remote control 42 are depleted.

In one embodiment, the technical support network 24 transmits an automated message to the telephone 20 informing the user that the batteries are depleted and should be replaced. Alternatively, a text message can be sent to a cell phone of the user 40, or an email can be sent to an email account of the user 40. In one embodiment, the computer 26 causes the television receiver 22 to display the notification on the television 44. In one embodiment, the notification is sent to the computer 34 at which a technical support technician 47 is working. The technical support technician 47 can then audibly speak to the user 40 informing him that the batteries in the remote control 42 are depleted and should be replaced.

In one embodiment, the status message is regarding something other than the batteries in the remote control 42. For example, the television receiver 22 may determine that a signal strength of control signals received from the remote control 42 are unusually weak. In this case the user 40 may have arranged furniture at his residence in such a way that control signals are completely or partially blocked from the television receiver 22. In this case, the status message can be that the television receiver is obstructed from the remote control 42. The notification can be transmitted to the user indicating that the user should rearrange his furniture in order to ensure that the television receiver 22 is not obstructed from receiving control signals from the remote control 42.

The television receiver 22 can also provide a status message indicating that a component internal to the television receiver 22 has become defective or is configured such that it is causing the user to experience technical difficulties. For example, the television receiver 22 can indicate that an output between the television 44 and the television receiver 22 is incorrectly configured such that audio or video signals from the television receiver 22 are not properly received by the television 44. Likewise, an internal circuit can have become defective, and the status message can indicate this.

It will be apparent to those of skill in the art that many other types of status messages and methods for reporting the status message to the user 40 can be implemented in accordance with principles of the present disclosure. All such status messages and methods for informing the user 40 of the status message fall within the scope of the present disclosure.

While the technical support network 24 has been illustrated with a first computer 26 and a second computer 34 at the technician terminal 30, the first computer 26 may correspond to a network of computers, servers, processors, data storage sites, etc. The network of computers, servers, etc may be in diverse locations. When the user contacts the technical support network 24 via the phone line 32, one of the computers or servers of the network may first receive the call. Those of skill in the art will recognize that there are many ways to implement a technical support network in accordance with principles of the present disclosure. All such implementations fall within the scope of the present disclosure.

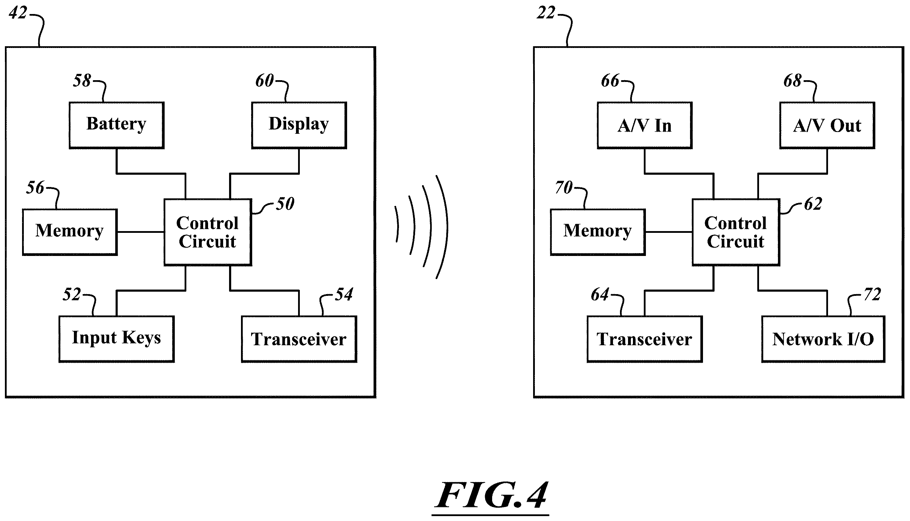

Figure 4 is a block diagram of the remote control 42 and the television receiver 22 according to one embodiment. The remote control 42 includes a control circuit 50, input keys 52 coupled to the control circuit 50, and a transceiver 54 coupled to the control circuit 50. A memory 56 is also coupled to the control circuit 50. A battery 58 is coupled to the control circuit 50. A display 60 is also coupled to the control circuit 50.

The television receiver 22 includes a control circuit 62. A transceiver 64 is coupled to the control circuit 62. A memory 70, a network I/O 72, audio/video input 66, and audio/video output 68 are also coupled to the control circuit 62.

The remote control 42 controls the television receiver 22 by transmitting from the transceiver 54 control signals to the television receiver 22. The control signals can indicate that the channel should be changed, the volume should be increased, that a programming guide should be accessed, that a DVR menu should be accessed, or that video should be paused, rewound, or fast-forwarded. The user can input commands to the control circuit 50 by pressing the input keys 52. The input keys 52 can include typical number keys, rewind, fast-forward, play, pause, and stop keys, keys indicating which device should be controlled, and other keys such as are well known to those of skilled in the art. Other inputs such as touchpads, touch screens, pointing interfaces may also be included in the remote. The control circuit 50 can store in the memory 56 particular codes to be included in the control signals sent to the television receiver 22. The battery 58 supplies power to the control circuit 50 and all the other components of the remote control 42. The display 60 can provide indications to the user regarding the function of the remote control 42 or the television receiver 22.

The transceiver 64 of the television receiver 22 receives the control signals from the remote control 42 and provides them to the control circuit 62. The control circuit 62 can then cause output signals such as audio or video output signals to be output to a television 44 via the audio/video output 68. Television signals can be received from a satellite or cable television provider via the audio/video input 66. The control circuit 62 can store in memory recorded programs, control signals, or status reports from the remote control. The network I/O 72 can be connected to the Internet and can transmit and receive information via the Internet thereby.

The remote control 42 can transmit status signals regarding the charge state of batteries 58. In particular, the control circuit 50 can monitor the charge state of the battery 58 and can transmit the charge state of the battery 58 to the television receiver 22. The control circuit 62 can receive the status message regarding the charge state of the battery, and can store it in the memory 70. When the user of the remote control 42 contacts technical support as described previously, and the technical support network 24 transmits a request to the television receiver 22 for a status message, the request is received via the network I/O 72. The control circuit 62 then retrieves from the memory 70 the most recent status message regarding the charge state of the batteries 58 of the remote control 42. Alternatively, when the control circuit 62 receives the requests for the status message, the control circuit 62 can control the transceiver 64 to transmit a request for a status message from the remote control 42. In response to receiving the request, the remote control 42 can transmit to the television receiver the status message regarding the batteries 58. The television receiver 22 can then transmit the status message to the technical support network 24 via the network I/O 72.

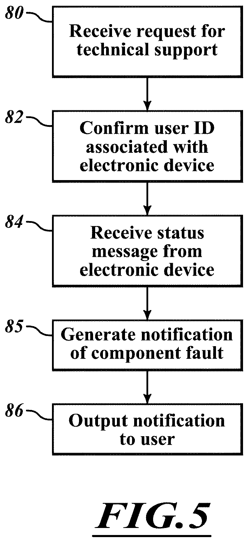

Figure 5 is a flowchart of a method for providing technical support to a user of an electronic device according to one embodiment. At 80, the technical support network 24 receives a request for technical support from a user of the electronic device 22. At 82, the technical support network 24 ascertains the identity of the user and confirms that the user is associated with the electronic device 22. At 84, a status message is received from the electronic device regarding a component of the electronic device that may be causing the technical problem that the user is experiencing. At 85, the technical support network 24 generates a notification that a component of the electronic device 22 is faulty or configured in such a way that the user is experiencing technical difficulties. At 86, the technical support network 24 outputs a notification to the user indicating that the component of the electronic device 22 is faulty or is improperly configured. The scope of the invention is limited by the claims.

## Claims

1. A method comprising:
receiving (80) from a user, by a technical support network located a remote site, a request regarding an electronic system including a television receiver;
retrieving, by the technical support network, from a database an identity associated with the request;
ascertaining (82), by the technical support network, that the request is associated with the television receiver based on the identity;
transmitting, by the technical support network, to the television receiver, a first request to transmit a state of batteries in a remote control associated with the television receiver to the technical support network in response to ascertaining that the request is associated with the television receiver;
receiving, by the television receiver, the first request to transmit the state of batteries in the remote control;
transmitting, by the television receiver, to the remote control a second request to transmit the state of batteries in the remote control, in response to receiving the first request;
receiving, by the television receiver, from the remote control a first status message regarding the state of the batteries in the remote control;
transmitting, by the television receiver, to the technical support network a second status message regarding the state of the batteries in the remote control, in response to receiving the first status message;
receiving (84), by the technical support network, a signal from the television receiver indicative of the state of the batteries in the remote control associated with the television receiver;
generating (85), by the technical support network, a notification that the batteries are in a depleted state; and
transmitting (86), by the technical support network, the notification to a device associated with the request without assistance of an operator of the technical support network.

2. The method of claim 1 comprising displaying the notification on a display coupled to the television receiver.

3. The method of claim 1 or 2 wherein transmitting the notification comprises transmitting the notification to a telephone of a user associated with the request.

4. The method of claim 1, 2 or 3 comprising transmitting the notification to a technician.

5. The method of any preceding claim comprising:
retrieving the identity based on a telephone number of a telephone from which the request regarding the electronic system was received; and
transmitting the notification to the telephone.

6. The method of claim 5 wherein the notification is an audio signal.

7. The method of any preceding claim wherein the notification is a text message, the method comprising transmitting the notification to a telephone of a user associated with the request.

8. The method of any preceding claim comprising:
receiving a telephone number from which the request regarding the electronic system was received;
retrieving a telephone number associated with the television receiver from the database; and
identifying a user of the television receiver by determining that the telephone number from which the request regarding the electronic system was received matches the telephone number associated with the television receiver retrieved from the database.

9. A system comprising:
a television receiver (22) configured to display television content on a display coupled to the television receiver (22); and
a technical support network (24) configured to:
receive a user request regarding an electronic system including the television receiver (22);
receive an identification associated with the user request;
ascertain that the request is associated with the television receiver (22) by referring to a database; the technical support network (24) transmitting, to the television receiver (22), a first request to transmit a state of batteries in a remote control (42) associated with the television receiver (22) to the technical support network (24) in response to ascertaining that the request is associated with the television receiver (22);
the television receiver (22) receiving the first request to transmit the state of batteries in the remote control (42);
the television receiver (22) transmitting, to the remote control (42) a second request to transmit the state of batteries in the remote control (42), in response to receiving the first request;
the television receiver (22) receiving, from the remote control (42) a first status message regarding the state of the batteries in the remote control (42);
the television receiver (22) transmitting, to the technical support network (24) a second status message regarding the state of the batteries in the remote control (42), in response to receiving the first status message;
the technical support network receiving a signal from the television receiver indicative of the state of the batteries in the remote control associated with the television receiver;
the technical support network generating a notification that the batteries are in a depleted state; and
the technical support network transmitting the notification to a device associated with the request without assistance of an operator of the technical support network.

10. The system of claim 9 wherein the technical support network (24) is configured to transmit the notification to a technician (47).

11. The system of claim 9 or 10 wherein the technical support network (24) is configured to transmit the notification to a telephone (20) of the user (40).

12. The system of any of claims 9 to 11 wherein the technical support network (24) is configured to transmit the notification via a text message.

13. The system of any of claims 9 to 12 wherein the technical support network (24) is configured to:
receive a telephone number from which the request regarding the electronic system was received;
retrieve a telephone number associated with the television receiver (22) from the database; and
identify a user of the television receiver (22) by determining that the telephone number from which the request regarding the electronic system was received matches the telephone number associated with the television receiver (22) retrieved from the database.

14. The system of any of claims 9 to 13 wherein the notification indicates that a signal strength of signals received by the television receiver (22) from the remote control (42) associated with the television receiver (22) are weak.

15. The system of any of claims 9 to 14 wherein the television receiver (22) is configured to display the notification on the display.

## Patentansprüche

1. Verfahren, das Folgendes beinhaltet:
Empfangen (80), von einem Benutzer, durch ein an einer fernen Stelle befindliches technisches Unterstützungsnetzwerk, einer Anforderung in Bezug auf ein elektronisches System einschließlich eines Fernsehempfängers;
Abrufen, durch das technische Unterstütungsnetzwerk, einer mit der Anforderung assoziierten Identität aus einer Datenbank;
Feststellen (82) auf der Basis der Identität durch das technische Unterstützungsnetzwerk, dass die Anforderung mit dem Fernsehempfänger assoziiert ist;
Übertragen zum Fernsehempfänger, durch das technische Unterstützungsnetzwerk, einer ersten Anforderung zum Übertragen eines Zustands von Batterien in einer mit dem Fernsehempfänger assoziierten Fernbedienung zu dem technischen Unterstützungsnetzwerk als Reaktion auf die Feststellung, dass die Anforderung mit dem Fernsehempfänger assoziiert ist;
Empfangen, durch den Fernsehempfänger, der ersten Anforderung zum Übertragen des Zustands von Batterien in der Fernbedienung;
Übertragen zu der Fernbedienung, durch den Fernsehempfänger, einer zweiten Anforderung zum Übertragen des Zustands von Batterien in der Fernbedienung als Reaktion auf den Empfang der ersten Anforderung;
Empfangen von der Fernbedienung, durch den Fernsehempfänger, einer ersten Statusnachricht in Bezug auf den Zustand der Batterien in der Fernbedienung;
Übertragen zu dem technischen Unterstützungsnetzwerk, durch den Fernsehempfänger, einer zweiten Statusnachricht in Bezug auf den Zustand der Batterien in der Fernbedienung als Reaktion auf den Empfang der ersten Statusnachricht;
Empfangen (84), durch das technische Unterstützungsnetzwerk, eines Signals von dem Fernsehempfänger, das den Zustand der Batterien in der mit dem Fersehempfänger assoziierten Fernbedienung anzeigt;
Erzeugen (85), durch das technische Unterstützungsnetzwerk, einer Benachrichtigung, dass die Batterien in einem leeren Zustand sind; und
Übertragen (86), durch das technische Unterstützungsnetzwerk, der Benachrichtigung zu einem mit der Anforderung assoziierten Gerät ohne Assistenz eines Bedieners des technischen Unterstützungsnetzwerks.

2. Verfahren nach Anspruch 1, das das Anzeigen der Benachrichtigung auf einem mit dem Fernsehempfänger gekoppelten Display beinhaltet.

3. Verfahren nach Anspruch 1 oder 2, wobei das Übertragen der Benachrichtigung das Übertragen der Benachrichtigung zu einem Telefon eines mit der Anforderung assoziierten Benutzers beinhaltet.

4. Verfahren nach Anspruch 1, 2 oder 3, das das Übertragen der Benachrichtigung zu einem Techniker beinhaltet.

5. Verfahren nach einem vorherigen Anspruch, das Folgendes beinhaltet:
Abrufen der Identität auf der Basis einer Telefonnummer eines Telefons, von dem die Anforderung in Bezug auf das elektronische System empfangen wurde; und
Übertragen der Benachrichtigung zu dem Telefon.

6. Verfahren nach Anspruch 5, wobei die Benachrichtigung ein Audiosignal ist.

7. Verfahren nach einem vorherigen Anspruch, wobei die Benachrichtigung eine Textnachricht ist, wobei das Verfahren das Übertragen der Benachrichtigung zu einem Telefon eines mit der Anforderung assoziierten Benutzers beinhaltet.

8. Verfahren nach einem vorherigen Anspruch, das Folgendes beinhaltet:
Empfangen einer Telefonnummer, von der die Anforderung in Bezug auf das elektronische System empfangen wurde;
Abrufen einer mit dem Fernsehempfänger assoziierten Telefonnummer aus der Datenbank; und
Identifizieren eines Benutzers des Fernsehempfängers durch Feststellen, dass die Telefonnummer, von der die Anforderung in Bezug auf das elektronische System empfangen wurde, mit der Telefonnummer übereinstimmt, die mit dem aus der Datenbank abgerufenen Fernsehempfänger assoziiert ist.

9. System, das Folgendes umfasst:
einen Fernsehempfänger (22), konfiguriert zum Anzeigen von Fernsehinhalt auf einem mit dem Fernsehempfänger (22) gekoppelten Display; und
ein technisches Unterstützungsnetzwerk (24), konfiguriert zum:
Empfangen einer Benutzeranforderung in Bezug auf ein elektronisches System einschließlich eines Fernsehempfängers (22);
Empfangen einer mit der Benutzeranforderung assoziierten Identifikation;
Feststellen, dass die Anforderung mit dem Fernsehempfänger (22) assoziiert ist, durch Bezugnehmen auf eine Datenbank;
wobei das technische Unterstützungsnetzwerk (24) eine erste Anforderung zum Übertragen eines Zustands von Batterien in einer mit dem Fernsehempfänger (22) assoziierten Fernbedienung (22) an das technische Unterstützungsnetzwerk (24) zum Fernsehempfänger (22) als Reaktion auf die Feststellung überträgt, dass die Anforderung mit dem Fernsehempfänger (22) assoziiert ist;
wobei der Fernsehempfänger (22) die erste Anforderung zum Übertragen des Zustands von Batterien in der Fernbedienung (42) empfängt;
wobei der Fernsehempfänger (22) eine zweite Anforderung zum Übertragen des Zustands von Batterien in der Fernbedienung (42) als Reaktion auf den Empfang der ersten Anforderung zu der Fernbedienung (42) überträgt;
wobei der Fernsehempfänger (22) von der Fernbedienung (42) eine erste Statusnachricht in Bezug auf den Zustand der Batterien in der Fernbedienung (42) empfängt;
wobei der Fernsehempfänger (22) eine zweite Statusnachricht in Bezug auf den Zustand der Batterien in der Fernbedienung (42) als Reaktion auf den Empfang der ersten Statusnachricht zu dem technischen Unterstützungsnetzwerk (24) überträgt;
wobei das technische Unterstützungsnetzwerk ein Signal vom Fernsehempfänger empfängt, das den Zustand der Batterien in der mit dem Fernsehempfänger assoziierten Fernbedienung anzeigt;
wobei das technische Unterstützungsnetzwerk eine Benachrichtigung erzeugt, dass die Batterien in einem leeren Zustand sind; und
wobei das technische Unterstützungsnetzwerk die Benachrichtigung zu einem mit der Anforderung assoziierten Gerät ohne Assistenz eines Bedieners des technischen Unterstützungsnetzwerks überträgt.

10. System nach Anspruch 9, wobei das technische Unterstützungsnetzwerk (24) zum Übertragen der Benachrichtigung zu einem Techniker (47) konfiguriert ist.

11. System nach Anspruch 9 oder 10, wobei das technische Unterstützungsnetzwerk (24) zum Übertragen der Benachrichtigung zu einem Telefon (20) des Benutzers (40) konfiguriert ist.

12. System nach einem der Ansprüche 9 bis 11, wobei das technische Unterstützungsnetzwerk (24) zum Übertragen der Benachrichtigung über eine Textnachricht konfiguriert ist.

13. System nach einem der Ansprüche 9 bis 12, wobei das technische Unterstützungsnetzwerk (24) konfiguriert ist zum:
Empfangen einer Telefonnummer, von der die Anforderung in Bezug auf das elektronische System empfangen wurde;
Abrufen einer mit dem Fernsehempfänger (22) assoziierten Telefonnummer aus der Datenbank; und
Identifizieren eines Benutzers des Fernsehempfängers (22) durch Feststellen, dass die Telefonnummer, von der die Anforderung in Bezug auf das elektronische System empfangen wurde, mit der Telefonnummer übereinstimmt, die mit dem aus der Datenbank abgerufenen Fernsehempfänger (22) assoziiert ist.

14. System nach einem der Ansprüche 9 bis 13, wobei die Benachrichtigung anzeigt, dass eine Signalstärke von Signalen, die vom Fernsehempfänger (22) von der mit dem Fernsehempfänger (22) assoziierten Fernbedienung (42) empfangen wurden, gering ist.

15. System nach einem der Ansprüche 9 bis 14, wobei der Fernsehempfänger (22) zum Anzeigen der Benachrichtigung auf dem Display konfiguriert ist.

## Revendications

1. Procédé comprenant :
la réception (80) depuis un utilisateur, par un réseau de support technique situé dans un site distant, d'une demande concernant un système électronique comportant un récepteur de télévision ;
le recouvrement, par le réseau de support technique, à partir d'une base de données d'une identité associée à la demande ;
la détermination (82), par le réseau de support technique, que la demande est associée au récepteur de télévision en fonction de l'identité ;
la transmission, par le réseau de support technique, au récepteur de télévision, d'une première demande de transmission au réseau de support technique d'un état des batteries dans une télécommande associée au récepteur de télévision en réponse à la détermination que la demande est associée au récepteur de télévision ;
la réception, par le récepteur de télévision, de la première demande de transmission de l'état des batteries dans la télécommande ;
la transmission, par le récepteur de télévision, à la télécommande d'une seconde demande de transmission de l'état des batteries dans la télécommande, en réponse à la réception de la première demande ;
la réception, par le récepteur de télévision, depuis la télécommande d'un premier message d'état concernant l'état des batteries dans la télécommande ;
la transmission, par le récepteur de télévision, au réseau de support technique d'un second message d'état concernant l'état des batteries dans la télécommande, en réponse à la réception du premier message d'état ;
la réception (84), par le réseau de support technique, d'un signal depuis le récepteur de télévision indicatif de l'état des batteries dans la télécommande associée au récepteur de télévision ;
la génération (85), par le réseau de support technique, d'une notification que les batteries sont déchargées ; et
la transmission (86), par le réseau de support technique, de la notification à un dispositif associé à la demande sans assistance d'un opérateur du réseau de support technique.

2. Procédé selon la revendication 1 comprenant l'affichage de la notification sur un afficheur couplé au récepteur de télévision.

3. Procédé selon la revendication 1 ou 2 dans lequel la transmission de la notification comprend la transmission de la notification à un téléphone d'un utilisateur associé à la demande.

4. Procédé selon la revendication 1, 2 ou 3 comprenant la transmission de la notification à un technicien.

5. Procédé selon l'une quelconque des revendications précédentes comprenant :
le recouvrement de l'identité en fonction d'un numéro de téléphone d'un téléphone à partir duquel la demande concernant le système électronique a été reçue ; et
la transmission de la notification au téléphone.

6. Procédé selon la revendication 5 dans lequel la notification est un signal audio.

7. Procédé selon l'une quelconque des revendications précédentes dans lequel la notification est un message textuel, le procédé comprenant la transmission de la notification à un téléphone d'un utilisateur associé à la demande.

8. Procédé selon l'une quelconque des revendications précédentes comprenant :
la réception d'un numéro de téléphone à partir duquel la demande concernant le système électronique a été reçue ;
le recouvrement d'un numéro de téléphone associé au récepteur de télévision à partir de la base de données ; et
l'identification d'un utilisateur du récepteur de télévision en déterminant que le numéro de téléphone à partir duquel la demande concernant le système électronique a été reçue correspond au numéro de téléphone associé au récepteur de télévision recouvré à partir de la base de données.

9. Système comprenant :
un récepteur de télévision (22) configuré pour afficher un contenu télévisé sur un afficheur couplé au récepteur de télévision (22) ; et
un réseau de support technique (24) configuré pour :
recevoir une demande d'utilisateur concernant un système électronique comportant le récepteur de télévision (22) ;
recevoir une identification associée à la demande d'utilisateur ;
déterminer que la demande est associée au récepteur de télévision (22) par référence à une base de donnée ;
le réseau de support technique (24) transmettant, au récepteur de télévision (22), une première demande de transmission au réseau de support technique (24) d'un état des batteries dans une télécommande (42) associée au récepteur de télévision (22) en réponse à la détermination que la demande est associée au récepteur de télévision (22) ;
le récepteur de télévision (22) recevant la première demande de transmission de l'état des batteries dans la télécommande (42) ;
le récepteur de télévision (22) transmettant, à la télécommande (42) une seconde demande de transmission de l'état des batteries dans la télécommande (42), en réponse à la réception de la première demande ;
le récepteur de télévision (22) recevant, depuis la télécommande (42) un premier message d'état concernant l'état des batteries dans la télécommande (42) ;
le récepteur de télévision (22) transmettant, au réseau de support technique (24) un second message d'état concernant l'état des batteries dans la télécommande (42), en réponse à la réception du premier message d'état ;
le réseau de support technique recevant un signal depuis le récepteur de télévision indicatif de l'état des batteries dans la télécommande associée au récepteur de télévision ;
le réseau de support technique générant une notification que les batteries sont déchargées ; et
le réseau de support technique transmettant la notification à un dispositif associé à la demande sans assistance d'un opérateur du réseau de support technique.

10. Système selon la revendication 9 dans lequel le réseau de support technique (24) est configuré pour transmettre la notification à un technicien (47).

11. Système selon la revendication 9 ou 10 dans lequel le réseau de support technique (24) est configuré pour transmettre la notification à un téléphone (20) d'un utilisateur (40).

12. Système selon l'une quelconque des revendications 9 à 11 dans lequel le réseau de support technique (24) est configuré pour transmettre la notification par un message textuel.

13. Système selon l'une quelconque des revendications 9 à 12 dans lequel le réseau de support technique (24) est configuré pour :
recevoir un numéro de téléphone à partir duquel la demande concernant le système électronique a été reçue ;
recouvrer un numéro de téléphone associé au récepteur de télévision (22) à partir de la base de données ; et
identifier un utilisateur du récepteur de télévision (22) en déterminant que le numéro de téléphone à partir duquel la demande concernant le système électronique a été reçue correspond au numéro de téléphone associé au récepteur de télévision (22) recouvré à partir de la base de données.

14. Système selon l'une quelconque des revendications 9 à 13 dans lequel la notification indique qu'une force de signal des signaux reçus par le récepteur de télévision (22) depuis la télécommande (42) associée au récepteur de télévision (22) est faible.

15. Système selon l'une quelconque des revendications 9 à 14 dans lequel le récepteur de télévision (22) est configuré pour afficher la notification sur l'afficheur.
